**Europäisches Patentamt**

**European Patent Office**

**Office européen des brevets**

(19)

(11) Veröffentlichungsnummer : **0 114 179 B2**

(12) **NEUE EUROPÄISCHE PATENTSCHRIFT**

(45) Veröffentlichungstag der neuen Patentschrift :
06.05.92 Patentblatt 92/19

(51) Int. Cl.$^5$ : **H02B 13/02**

(21) Anmeldenummer : **83107100.6**

(22) Anmeldetag : **20.07.83**

(54) **Gekapselte, mit einem Isoliergas gefüllte Mittelspannungs Schaltanlage.**

(30) Priorität : **27.12.82 DE 3248211**

(43) Veröffentlichungstag der Anmeldung :
**01.08.84 Patentblatt 84/31**

(45) Bekanntmachung des Hinweises auf die
Patenterteilung :
**12.10.88 Patentblatt 88/41**

(45) Bekanntmachung des Hinweises auf die
Entscheidung über den Einspruch :
**06.05.92 Patentblatt 92/19**

(84) Benannte Vertragsstaaten :
**AT BE CH FR GB IT LI NL SE**

(56) Entgegenhaltungen :
**EP-A- 0 093 225**
**DE-A- 1 490 578**
**DE-A- 1 590 227**
**DE-A- 2 733 777**
**FR-A- 1 407 080**

(73) Patentinhaber : **Felten & Guilleaume**
**Energietechnik AG**
**Schanzenstrasse 24-30 Postfach 80 50 01**
**W-5000 Köln 80 (DE)**

(72) Erfinder : **Mooz, Dietrich, Dipl.-Ing.**
**Mergelskull 15**
**W-4150 Krefeld (DE)**

EP 0 114 179 B2

## Beschreibung

Die Erfindung bezieht sich auf eine gekapselte, mit einem Isoliergas gefüllte Mittelspannungs-Schaltanlage gemäß dem Oberbegriff des Anspruchs 1.

Eine derartige Schaltanlage ist durch die FR-A-1 407 080 bekannt. Diese ist mit Schubschaltern zur Trennung von Ringleitungen und mit besonderen Erdungsschaltern ausgestattet.

Eine weitere derartige Anlage gehört durch die EP-A-0 093 225 zum Stand der Technik gemäß Art 54 (3) EPÜ. Diese Anlage zeichnet sich durch einen geringen Raumbedarf aus und kann daher besonders in Netzverteilerstationen eingesetzt werden. Die Phasen eines Schaltfeldes sind hierbei übereinander angeordnet, während die einzelnen Schaltfelder sich nebeneinander befinden. Die Schaltfelder sind untereinander abgeteilt, sodaß sich Störungen eines Schaltfeldes nicht auf ein benachbartes Schaltfeld auswirken können. Die Phasen eines Schaltfeldes sind dagegen wie auch bei der zuvor erwähnten Schaltanlage nicht abgeteilt, sodaß sich ein Querlichtbogen innerhalb eines Schaltfeldes ausbreiten kann.

Es ist ferner eine gasisolierte Mittelspannungs- Kleinschaltanlage bekannt, die im Gasdruckbereich von 0 bis 0,1 bar arbeitet (DE-A-2 733 777). In dem Gehäuse befindet sich ein als Umschalter zu handhabender dreipoliger Trennschalter und dazu querliegend angeordnete dreipolige Lasttrennschalter, bestehend aus gasdicht gekapselten Löschkammern mit je einem axial beweglichen Schaltstift und einem feststehenden, nicht sichtbaren Gegenkontakt. Auch hier sind die einzelnen Phasen eines Lasttrennschalters nicht abgeteilt.

Die Unterbringung aller Teile einer Schaltanlage in einem einzigen Raum bleibt somit problematisch, falls ein Querlichtbogen zwischen den Phasen auftritt.

Der Erfindung liegt daher die Aufgabe zugrunde, eine Schaltanlage ausgehend von der FR-A-1407080 dahingehend weiterzuentwickeln, daß die einzelnen Phasen eines Schaltfeldes vor der Ausbreitung eines Querlichtbogens wirkungsvoll geschützt sind.

Diese Aufgabe wird erfindungsgemäß durch die im Kennzeichen des Anspruchs 1 angegebenen konstruktiven Maßnahmen gelöst.

Die mit der Erfindung erzielten Vorteile bestehen darin, daß die Aufteilung der Schaltanlage in einzelne Kammern dazu führt, auftretende Störfälle auf die jeweilige Phase zu beschränken.

Sofern die Kammern voneinander unabhängige Gasvolumina besitzen, führt die Undichtigkeit einer Kammer nicht zum vollstandigen Ausfall der Gesamtanlage.

Ein Ausführungsbeispiel ist in einer Zeichnung dargestellt und wird im folgenden näher beschrieben. Es zeigen

Fig. 1 eine Schaltanlage in Vorderansicht

Fig. 2 in Seitenansicht

Fig. 3 das Gehäuse dieser Schaltanlage in Vorderansicht, teilweise ohne Vorderwand.

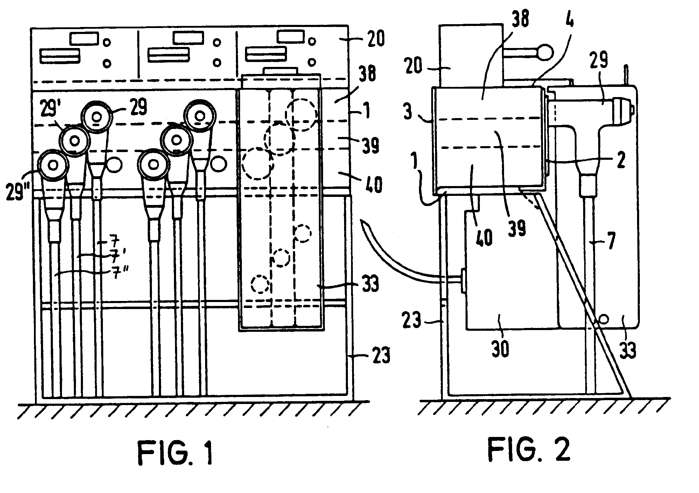

Nach den Figuren 1 und 2 besteht die Schaltanlage aus einem Gehäuse 1, das eine vierseitige prismatische Form aufweist und im Querformat angeordnet ist. Die Vorderwand 2 des Gehäuses dient der Aufnahme von Steckern 29, 29', 29". Diese drei Stecker gehören jeweils zu einem Schaltfeld, wobei das vorgesehene Gehäuse für drei Schaltfelder bestimmt ist. Das Gehäuse besitzt eine Rückwand 3, die als umlaufend eingeschweißtes Teil mit einer Sollbruchstelle ausgeführt ist. Die Oberseite 4 des Gehäuses bietet eine Aufnahmemöglichkeit für eine Betätigungsvorrichtung 20 für die Lasttrennschalter. Der Einsatz der Stecker, die mit Kabeln 7, 7', 7" verbunden sind, macht es beim Ziehen der Stecker erforderlich, daß das Gehäuse in einer bestimmten Höhe angeordnet sein muß. Hierzu dient ein Stützrahmen 23, der mit dem Gehäuse fest verbunden ist. Für die Hochspannungssicherungen ist ein Anbau 30 vorgesehen. Mittels eines schwenkbaren Deckels 33 kann dieser Anbau verschlossen werden. Das Gehäuse selbst ist im Inneren in drei übereinander liegende waagerechte Kammern 38, 39 und 40 unterteilt, die unter einander gegebenenfalls gasdicht isoliert sind.

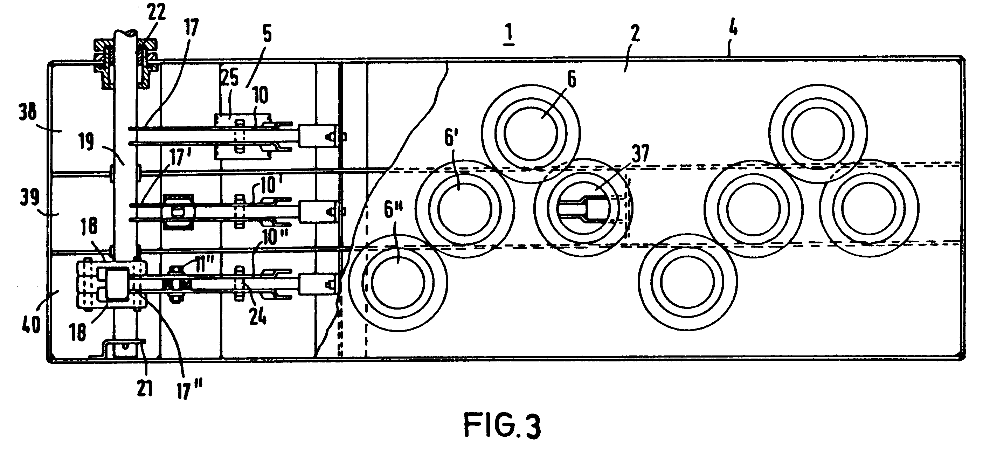

In der Fig. 3 sind Einzelheiten des Gehäuseinneren dargestellt, wobei ein Teil die Außenansicht der Vorderwand 2 wiedergibt. Es handelt sich hier wiederum um eine Schaltanlage mit drei Schaltfeldern 5. Die einzelnen Schaltfelder sind im wesentlichen gleich gestaltet, so daß sich die Beschreibung auf ein Schaltfeld beschränken kann. An der Vorderwand des Gehäuses befinden sich je Schaltfeld drei diagonal angeordnete Durchführungen 6, 6' und 6". Es sind drei Lasttrennschalter mit einer Erdungsvorrichtung vorgesehen, deren Schaltmesser 10, 10' und 10" sich in horizontaler Richtung bewegen. Die nicht kontaktierenden Schaltmesserenden 17, 17' und 17" sind über Koppelstangen 18 mit der Schaltwelle 19 verbunden. Die Schaltwelle weist dabei die Besonderheit auf, daß sie einseitig im Inneren des Gehäuses gelagert ist (21), während die andere Seite über eine gasdichte Durchführung 22 nach außen geführt ist.

Die Enden der Schaltmesser, die als Doppelmesser ausgeführt sind, kontaktieren die Sammelschienen beidseitig, wobei zwischen den Messern jeweils eine Zugfeder 24 angeordnet ist. Außerdem sind die Messerenden jeweils mit einer Klappe 25 ausgestattet, die die Aufgabe hat, die notwendige Strömung für eine Lichtbogenlöschung zu erzeugen. Die Vorderseite ist in Höhe der Messerenden mit einem Schauglas 37 versehen, um den Zustand der Trennstrecke überprüfen zu können.

Das gesamte Gehäuse ist in drei Kammern 38, 39 und 40 unterteilt, so daß jede Sammelschienenphase für sich gekapselt ist. Die Schaltwelle ist hierbei durch die einzelnen Kammern geführt, wobei die Durchführungen gegebenenfalls gasdicht sind.

## Patentansprüche

1. Gekapselte, mit einem Isoliergas gefüllte Mittelspannungs-Schaltanlage, insbesondere für den Einsatz in Netzverteilerstationen, mit mindestens drei Schaltfeldern (5), die jeweils mit einem dreipoligen Lasttrennschalter und einer Erdungsvorrichtung bestückt sind, mit Durchführungen (6,6′,6″) für den Anschluß von Ringleitungskabeln (7,7′,7″) und von Sicherungen eines Transformatorabzweigs, sowie mit Sammelschienen für die Phasen $L_1$, $L_2$ und $L_3$, mit einem gemeinsamen Gehäuse (1), in welchem die Schaltfelder (5) nebeneinander angeordnet und gasdicht eingeschlossen sind, **dadurch gekennzeichnet**, daß das gemeinsame Gehäuse (1) in drei übereinander liegende, waagrechte und untereinander durch Trennwände abgekapselte, gegebenenfalls gasdichte Kammern (38, 39,40) mit je einer Sammelschienenphase unterteilt ist, und daß in jeder Kammer (38,39,40) eine der Anzahl der Schaltfelder entsprechende Anzahl von zur jeweiligen Sammelschienenphase zugehörigen Lasttrennschalterpolen angeordnet sind, die als horizontal bewegende und die jeweilige Sammelschiene beidseitig kontaktierende Doppeltrennmesser (10,10′,10″) ausgebildet sind, und daß die Lasttrennschalter jeweils durch eine einseitig im Inneren des Gehäuses (1) gelagerte Schaltwelle betätigt werden.

2. Mittelspannungs-Schaltanlage nach Anspruch 1, dadurch gekennzeichnet, daß die Schaltwelle (19) durch die einzelnen Kammern (38, 39, 40) geführt ist, wobei die Durchführungen durch die Kammerwände gegebenenfalls gasdicht sind.

## Claims

1. Encapsulated medium-voltage switchgear filled with an insulating gas, in particular for use in mains distribution stations, with at least three switch panels (5), which are each equipped with a triple-pole load-break switch and an earthing device, with bushings (6, 6′, 6″) for the connection of ring main cables (7, 7′, 7″) and of fuses of a transformer branch as well as with bus-bars for the phases $L_1$, $L_2$ and $L_3$, with a common housing (1), in which the switch panels (5) are arranged one beside the other and enclosed in a gas-tight manner, characterized in that the common housing (1) is divided by dividing walls into three superimposed, horizontal chambers, possibly gas-tight chambers (38, 39, 40) which are encapsulated one from the other, each with a bus-bar phase, and in that in each chamber (38, 39, 40) there are arranged a number of load-break switch poles corresponding to the number of switch panels, these load-break switch poles being associated with the respective bus-bar phase and being constructed as horizontally moving double-disconnecting blades (10, 10′, 10″) which contact the respective bus-bar on both sides, and in that the load-break switches are each actuated by a switching shaft mounted at one end in the interior of the housing (1).

2. Medium-voltage switchgear according to claim 1, characterised in that the switching shat (19) is guided through the individual chambers (38, 39, 40), the bushings through the chamber walls possibly being gas-tight.

## Revendications

1. Installation de commutation moyenne tension, encapsulée, remplie de gaz isolant, en particulier pour des postes de distribution du réseau, comportant au moins trois panneaux de contacteurs (5) équipés chacun de sectionneurs sous charge et d'un dispositif de mise à la terre, avec des traversées (6, 6′, 6″) pour le raccordement à des câbles annulaires (7, 7′, 7″) et des sécurités de branchement de transformateur ainsi que de barres de collecteur pour les phases ($L_1$, $L_2$, $L_3$) avec un boîtier commun (1) dans lequel les panneaux de contacteurs (5) sont placés les uns à côté des autres et fermés de façon étanche au gaz, caractérisée en ce que le boîtier commun (1) est subdivisé en trois chambres (38, 39, 40) superposées, horizontales, séparées les unes des autres par des cloisons d'encapsulage et le cas échéant étanche au gaz, avec chaque fois une barre de collecteur de phases et en ce que dans chaque chambre (38, 39, 40) il y a un nombre de panneaux de connecteur correspondant au nombre de pôles de sectionneur de charge appartenant à chaque barre de collecteur de phases respective, qui sont réalisés sous la forme de lames doubles de sectionneur (10, 10′, 10″) à mouvement horizontal, mettant en contact les barres de collecteur respectives des deux côtés, et en ce que les sectionneurs en charge sont manoeuvrés par un arbre de commutation logé par une extrémité à l'intérieur du boîtier (1).

2. Installation de commutation moyenne tension selon la revendication 1, caractérisée en ce que l'arbre de sectionneur (19) est guidé à travers les chambres séparées (38, 39, 40), les traversées à travers les parois de chambre étant étanches aux gaz.

FIG. 1

FIG. 2

FIG.3

EP 0 114 179 B2